# EUROPEAN PATENT APPLICATION

(11) **EP 2 779 721 A1**
(43) Date of publication of application: **17.09.2014**
(21) Application number: 13305289.4
(22) Date of filing: 14.03.2013
(51) Int. Cl.: H04W 12/02, H04W 4/20, H04W 4/00, H04L 9/06, H04W 84/18

(54) **Method of privacy preserving during a device to device social networking**

(71) Applicant: Gemalto SA, 92190 Meudon (FR)
(72) Inventor: Phan, Ly Thanh, 92190 Meudon (FR); Pauliac, Mireille, 92190 Meudon (FR)
(74) Representative: Lotaut, Yacine Diaw

(57) **Abstract**

The present invention concerns a method of privacy-preserving during a device to device social networking. The invention relates to a method which allows to two social network applications inside two separate user devices, which are in proximity peer-to-peer communication, to know whether they share common user's profile (e.g. educational background, personal interests, biographical information, details contacts, preferences etc...), and which users' data they have in common, while preserving the confidentiality of the users' data (e.g. in case they do not share any common user's data then the application should not know what information the other application has).

## Description

### TECHNICAL FIELD

The present invention relates generally to direct device-to-device communication. In particular, the present invention concerns a method of privacy-preserving during a device to device social networking.

### BACKGROUND ART

With the development of the future service, next generation wireless communication systems, such as 3GPP (third Generation Partnership Project) LTE (long term evolution), WiMAX (World Interoperability for Microwave Access) and IMT-A (International Mobile Telecommunications - Advanced) system etc. are introduced to satisfy the QoS (Quality of Service) of various services. However, another challenge becomes evident: the increasing power consumption of the mobile device and the battery capacity does not keep pace with the increasing demand for energy to handle the upcoming tasks.

To overcome the aforementioned drawbacks, cellular controlled Device to Device (D2D) communication systems are introduced.

Cellular controlled D2D communication can be seen as one complementary for the conventional cellular communication systems, and is compatible to any cellular communication technology e.g. GSM, UMTS, 3GPP LTE, WiMAX, or IMT-A etc. Compared with conventional cellular communication systems, cellular controlled D2D systems have the following advantages: power saving, capacity improvement and lower service cost etc for UE perspective, larger market penetration and new services for network provider, service scalability for service provider, low and energy saving for device manufacture.

Device to Device enables the direct link of a device, user equipment UE, etc to another device using the cellular spectrum. This allows large volumes of media or other data to be transferred from one device to another over short distances and using a direct connection. This form of device to device transfer enables the data to be transferred without the need to run it via the cellular network itself, thereby avoiding problems with overloading the network.

Building of social networks or social relations among people who, for example, share interests, contacts, activities, backgrounds, or real-life connections is expected to grow with the D2D. For that, each user has to reveal his/her profile to the nearby devices to be linked to them. Users' profiles frequently include photos, educational background, personal interests, biographical information and contact details. Since the entire aim of social networking is to help you connect and communicate with other nearby devices then the profile should be public and accessible to them.

There is thus a general need in the art for a method proposing a D2D social networking privacy to allow users to limit access to their personal profile information to users having the same interests or confirmed friends without exchanging their own confidential data in order to preserve their privacy and to minimize network traffic.

### SUMMARY OF THE INVENTION

The present invention addresses the aforementioned drawbacks. The present invention relates to a method which allows two social network applications inside two separate user devices, which are in proximity peer-to-peer communication, to know whether they share common user's profile (e.g. educational background, personal interests, biographical information, details contacts, preferences etc...), and which user's data they have in common, while preserving the confidentiality of the user's data (e.g. in case they do not share any common user's data then the application should not know what information the other application has).

For that, the present invention relates to two social applications of two terminals exchanging cryptographic data over a peer-to-peer communication channel (e.g. Direct Wifi, LTE Direct, ProSe). Each data of the user's profile is transformed in cryptographic data for preserving the user privacy. The user's profile of each user social application frequently includes photos, educational background, preferences, personal interests, biographical information and contact details.

Each social application of each terminal computes a first list of cryptographic data corresponding to the data of the user's profile. Such cryptographic data could be the results of a one-way hashing algorithm (e.g. SHAx etc...) or a signature algorithm.

The first list of the cryptographic data is sent to the second social application of the second terminal. The second social application compares the received list to its own list of cryptographic data of its own profile (e.g. contacts, interests, preferences). If there is no match, the second terminal can conclude that the first application and the second application have no common social data (e.g. no common contacts, preferences, interests...).

If the second application finds one or more common cryptographic data within the received list and its own list, then the second application selects the plain text of user profile data corresponding to the common cryptographic data. Next, the second application computes a second list of cryptographic data of the selected plain text. The second application sends the second list of cryptographic data to the first terminal. In a preferred embodiment, the first list of cryptographic data is provided by an algorithm different from the one providing the second list of cryptographic data.

Upon reception of the second list of cryptographic data, the first terminal computes its own second list of cryptographic data from its profile data. The first terminal compares its own second list computed with the second received list of cryptographic data.

If there is no match, then the first terminal can conclude that the second terminal does not share common user's private information with it. If the first application finds one or more common cryptographic data within the received list and its own list, then the first terminal can conclude that the first terminal and the second terminal share these profiles data in common.

In the case where the first terminal concludes that the first terminal and the second terminal share common user's private information, then the first terminal sends an invitation to the second terminal to establish social networking communication.

With the invention, the privacy of the user is preserved. Indeed, before the invitation to join from first terminal, the second terminal has no hint about the social data of the user of the first terminal. The Multiple exchanges of cryptographic data allow preventing leakage of confidential information and preventing attack on the social data by one of the participants.

Moreover, the negotiation to establish the social networking communication is performed locally so that to avoid network congestion. The present invention has the advantage for each party of this negotiation to know whether the other party is genuine: not faking matches or replaying hashes to force a relationship.

To achieve those and other advantages, and in accordance with the purpose of the invention as embodied and broadly described, the invention proposes a method for privacy-preserving during a device to device social networking, said method comprising the following steps:
- connection by device-to-device communication of a first user terminal to a second user terminal
- elaboration and transmission of a broadcast message from the first terminal, said broadcast message comprising a request to establish a social networking session and a first list of cryptographic data of private data of the user's profile of the first user terminal,
- comparison by the second terminal of each cryptographic data of private data of its user's profile to each cryptographic data of the received list,
- when at least one cryptographic data matches, the social networking session is established.

The present invention also relates to a system of privacy-preserving during a device to device social networking between two user terminals connected by device to device communication, according to the method of the present invention.

### BRIEF DESCRIPTION OF THE DRAWINGS

The following detailed description will be better understood with the drawings, in which:
FIG. 1 illustrates the different entities involved or impacted by D2D communications in a cellular network.
FIG. 2 shows a schematic illustration of a user terminal wherein a social application is downloaded.
FIG. 3 is a logic flow diagram in accordance with an exemplary embodiment of this invention for establishing a D2D social networking connection between a first terminal and a second terminal.

### DETAILED DESCRIPTION OF THE EMBODIMENTS OF THE INVENTION

The same elements have been designated with the same referenced numerals in the different drawings. For clarity, only those elements and steps which are useful to the understanding of the present invention have been shown in the drawings and will be described.

Further, the mechanisms of data communication between the parties and their environment have not been detailed either, the present invention being here again compatible with usual mechanisms.

Moreover, when an action is said to be performed by a terminal 11, 12, it is in fact executed by a microprocessor 21 in this terminal controlled by instruction codes recorded in a program memory 22 on the said terminal. An action is also ascribed to an application or software. This means that part of the instruction codes making up the application or software are executed by the microprocessor.

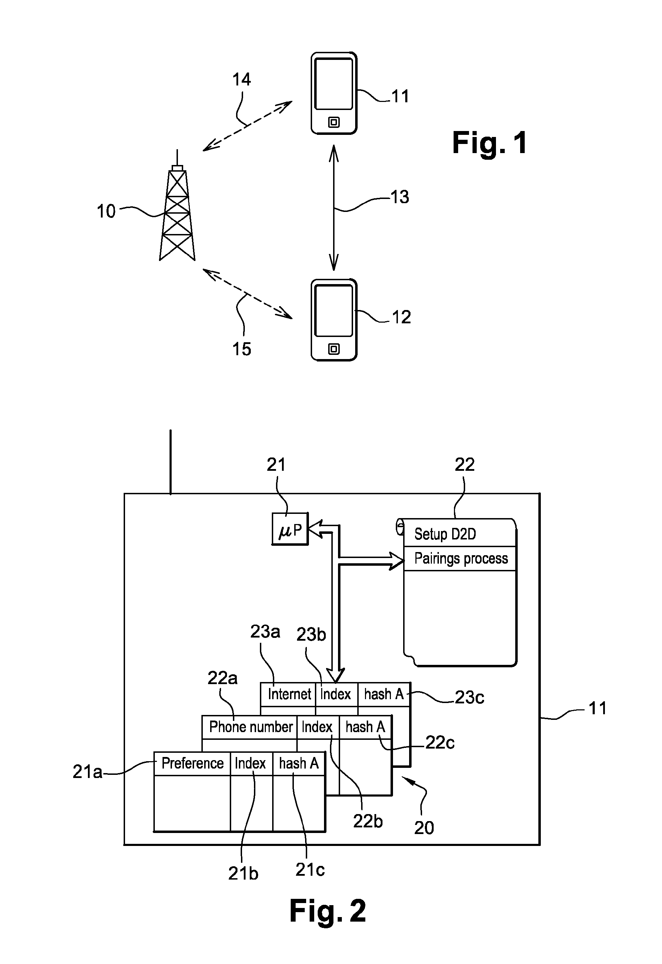

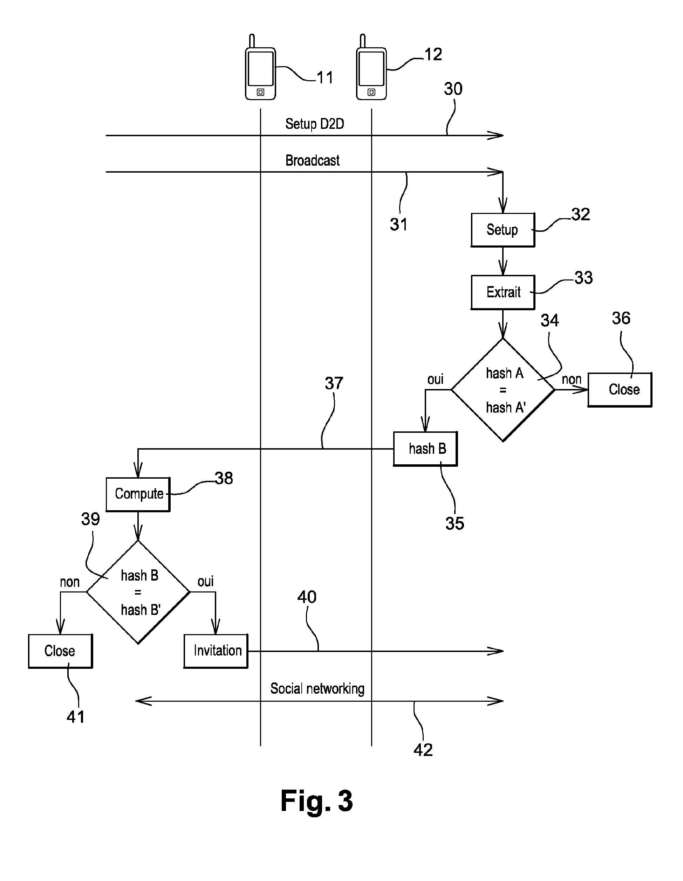

FIG. 1 is a block diagram illustrating the participants in the processes described in FIG. 3 according to an embodiment of the present invention. In this embodiment, FIG. 1 shows a mobile communication network comprising a network node/base station 10 and two user terminals 11 and 12.

In general, the various embodiments of the user terminal 11 and 12 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The method of the invention is a social networking software or application which is downloaded into the user terminal 11, 12. The software or application can be provided to the user terminal by a service provider. To download this software, the service provider can send to the terminal 10 a SMS including a downloading link of the software from a database of said provider. In another embodiment, the software can be downloaded directly through a link accessible from the website provider. By clicking on the download link, the user can install the software onto the terminal 11, 12.

In another embodiment, the software is integrated in the operating system that controls the execution of the instruction codes of the program memory. In another embodiment, the software of the invention is downloaded to the terminal 11, 12 at the time of manufacture.

Even though the user terminals 11, 12 could apply conventional communication via the base station 10, they can communicate directly with each other via a D2D direct communication link 13. According to an embodiment, the two user terminals 11, 12 are the terminating points of the communication. The direct communication link may be utilized during a service or a call, for example.

D2D communications, alternatively termed mobile-to-mobile (M2M), machine-to-machine (M2M), terminal-to-terminal (T2T) or peer-to-peer (P2P) communications, concern wireless communications directly between user terminals and are targeted for standardization sometimes beyond 3GPP LTE Release 10 (also referred to as LTE-Advanced or LTE-A) or direct Wi-Fi.

The direct communication link 13 may be established by the base station 10 that provides radio coverage to the cell in which the user terminals 11, 12 are located. The base station 10 may establish the connection 13 by controlling the operations of the user terminals 11, 12 via bi-directional control channels 14 and 15, as shown in FIG. 1. Therefore, the user terminals 11, 12 communicate over radio resources allocated by the base station 10.

To allow users to share ideas, activities, events, and interests by social networking within the established D2D communication, a profile of the user is recorded into a memory 20 of the user terminal. The profile comprises user's private data. These private data may include birthday, address, telephone number, educational background, email, and more intimate details such as personal interests, hobbies, favorite books/films/music, relationship status and activities across political, economic, and geographic borders ...

FIG.2 shows the user terminal 11 comprising a such memory 20 in which the profile of the user is recorded. In an embodiment, this data memory 20 is an EEPROM (Electrically-Erasable Programmable Read-Only Memory). Any other type of non-volatile memory could be used for the memory 20, for example a memory saved by cell.

During a storage process, the private data of the user profile is recorded. To record these private data into the memory 20, the software of the method of the present invention is set up. Then, the terminal launches the execution of said software. It is displayed a first area selector allowing the user to record at least one private data and a second area selector allowing the user to manage its profile.

In a first embodiment, when the user selects the storage process by, for instance, clicking on the corresponding area selector, a form is displayed on the user terminal 11. This form comprises fields allowing the user to enter private data he would like to share with others.

In another embodiment, when the user clicks on the first selecting area, the software can retrieve from the network, Internet, all the online social networking of which the user is member. From the retrieved social networking, the software can extract the private data of the user profile. These private data can be automatically recorded in the memory 20.

The data memory 20 is for example structured in the form of a table. For example, each row of the table corresponds to a private data of the profile and each column of the table corresponds to an information associated to this private data. Thus, the data memory 34 comprises a row 21a corresponding to a preference entered by the user or from an online social networking and a column 21 c comprising a cryptographic data computed from this preference. The data memory comprises a row 22a corresponding to a telephone number and a column 22c comprising a cryptographic data of this telephone number. The data memory can comprise a row 23a corresponding to a personal interest of the profile and a column 22c comprising a cryptographic data of this interest.

The cryptographic data is computed by any algorithms which prevent the retrieval of the initial confidential information. In an embodiment, the cryptographic data is computed by applying hashing functions or hashing algorithms (e.g., an MD5 or SHA hash...) to all the private data of the profile recorded or only on the private data which the user would like to share. A hashing algorithm will transform the private data of the profile into a fixed length identifier for easier evaluation. Applying the hash function may be performed by a remote server connected to the user terminal, or alternatively, may simply be performed by the user terminal itself.

In the embodiment illustrated, a first hash algorithm is applied to the private data of the profile to transform them to a first list of cryptographic data named herein hash_{A}.

At each new private data of the profile entered by the user or extracted from the user online social networking, the software computes the corresponding cryptographic data hash_{A} and updates the data memory 20.

The representation of the memories is only an illustration of the layout of components and recordings of data. In practice, these memories are unified or distributed according to constraints of size of the database and/or the speed of the processing operations desired.

In a preferred embodiment, the first list of confidential data hash_{A} is pre-computed at the time when the user's private data is recorded and before any set up of device-to-device social networking. In another embodiment, this first list is computed when it is needed, for example when the terminal receives or transmits a request to establish a social networking session.

FIG. 3 is a logic flow diagram that illustrates the operation of a method, and a result of execution of computer program instructions, in accordance with the exemplary embodiments of this invention. Therein, the process flow between the first user terminal 11 and the second user terminal 12 is depicted with labeled arrows to which respective Roman numbers are assigned. The flow is understood as being performed sequentially from top to bottom as indicated by the increasing Roman numbers. However, it should be noted that there may be multiple instances of this protocol run in parallel without specified ordering.

At Block 30 there is a step of sending an initiation message from the first user terminal 11 to the network node to initiate device-to-device communication with the second user terminal 12. Radio resources for device-to-device communication are setting up and the device-to-device communication is established.

It is well known in the literature, exemplary embodiments which enable the setup of a D2D communication. Various aspects of these exemplary embodiments include, but are not limited to, providing the capability to detect D2D traffic; providing a signal that can be used during connection setup to indicate D2D traffic; providing interaction to determine if a target user terminal is in a neighbouring cell, and whether a D2D communication is possible; the introduction of a D2D policy server at the base station/node and techniques for charging for the D2D connection. Those various exemplary embodiments are well known by the person skilled in the art and do not need to be described anymore.

At step 31, the user terminal 11 elaborates a broadcast message. This broadcast message comprises a request to establish a social networking link and the first list of cryptographic data hash_{A} of the first user terminal 11. This broadcast message is then transmitted to all the neighboured user terminals.

Upon it received this broadcast message, the second terminal 12 launches, at step 32, the execution of its social networking software. The software extracts, at step 33, from the data memory its first list of cryptographic data hash_{A'} if it is recorded or computes this list if it is not the case. At step 34, the software compares each cryptographic data of the extracted list hash_{A'} to each cryptographic data of the received list hash_{A.} When at least one cryptographic data matches, the software extracts from the memory the corresponding private data. Then, the software computes, at step 35, a second list of cryptographic data hash_{B} of the matching private data with a second cryptographic algorithm. In a preferred embodiment of the present invention and for more security, the second cryptographic algorithm is different from the first cryptographic algorithm. For example, the first algorithm can be MD5 and the second algorithm can be SHA1.

Instead, if no element matches, then the process flow will close, at step 36.

At step 37, in response to the broadcast message, the second terminal 12 elaborates a response message comprising the second list of cryptographic data hash_{B} of all the matching private data.

When the first terminal 11 receives the response message, its software computes, at step 38, a second list of cryptographic data hash_{B'} of all the private data of the profile with the same second cryptographic algorithm. Then at step 39, the software compares each cryptographic data of the received list hash_{B} to its computed cryptographic data hash_{B'.} When at least one cryptographic data matches, an invitation to join is sent, at step 40, to the second terminal 12. This invitation to join allows establishing, at step 42, a social network communication by for example call, instant messaging such SMS, ... Instead if no element matches, then the process flow will close, at step 41.

In order to minimize the number of cryptographic data computation in step 38 by the first terminal software, the broadcast message comprises also means which indicate a storage position of the cryptographic data into the memory. For that, to each cryptographic data of the first list hash_{A} is associated an index. If at least one cryptographic data of the first list hash_{A} matches with at least one of the extracted list hash_{A',} then the second terminal software computes the second list of cryptographic data hash_{B.} The response message comprises this second list wherein each cryptographic data is associated with a received index.

When the first terminal 11 receives the second list hash_{B,} the software extracts from the memory the private data associated to the received index. At step 38, the software computes only the cryptographic data of the extracted private data with the second algorithm. The fact to use means which indicate a storage position such as index allow to avoid the first terminal to have to compute cryptographic data for the whole user's private data of the profile.

In an embodiment, for a better security, a secure communication session is established between the user terminals 11, 12 before any exchanges between them. This secure communication may be implemented using key establishment protocols. A protocol is a multi-party algorithm, defined by a sequence of steps specifying the actions required of the user terminals 11 and 12 in order to achieve a specified objective. A key establishment protocol is a protocol whereby a shared secret becomes available to them for subsequent cryptographic applications. By exchanging messages which can only be decrypted by those with access to the proper key, cryptographic protocols can be used as a means to authenticate entities.

To perform the secure communication session, a key establishment protocols are used to set up shared secrets between the two terminals 11 and 12. This key establishment protocols may be sorted into main categories: pair-wise schemes, random key pre-distribution schemes, and Key Distribution Center (KDC). A pair-wise scheme is a protocol in which each terminal shares a unique pairwise key with every other terminal in the network. A random key pre-distribution scheme relies on a random graph. A Key Distribution Center (KDC) is a protocol where when two entities sharing no previous secret want to communicate securely with each other, they do so with the assistance of a third party, which has an existing shared key between both entities. The shared key can be pre-shared and may be distributed by a secure key distribution protocol (e.g. GBA) or has been pre-configured by an issuer during a personalization phase of a secure element.

In an embodiment, the shared session key can be created during the establishment of a D2D communication channel, at step 30, between the user terminals 11 and 12.

In an embodiment, the shared secret is stored in a secure element. The secure element usually defines a device including a tamper proof smart card chip capable to embed smart card-grade applications with the required level of security. The secure element can be integrated in various form factors: smartcard, SIM Card, SD Card, M2M form factor, USB keys or embedded in a larger circuit such the user terminal 11, 12.

In an embodiment, the invitation sent at step 40 comprises a signature of matched user's private data. Such signature is computed based on the shared key in order to prevent the terminals from replaying the received hashes. The signature may be computed inside the secure element so as to preserve confidentiality of the shared key.

In another embodiment, the social networking software can be stored and may be executed inside the secure element. In another embodiment, the social software stored in the terminal communicates with the secure element over a local communication interface (e.g. ISO, USB) and uses an application level protocol (e.g. USAT, STK protocol). In this embodiment, the secure element can perform the computation of cryptographic data.

In another less secure embodiment, when at least one cryptographic data matches, the second terminal software sends an invitation to join and an social networking session is established. In a variant, the second terminal software sends, at step 37, the matching cryptographic data to the first terminal 11. Upon the first terminal 11 receives the response message, its software compares, at step 39, each cryptographic data received to its recorded or computed first list of cryptographic data hash_{A'.} When at least one cryptographic data matches an invitation to join is sent, at step 40, to the second terminal 12.

It another embodiment, the cryptographic data is computed by applying signature algorithms. In this case, user terminals share previously a common secret or session token via for instance the Diffie-Hellman key exchange algorithm

The first terminal uses the secret key to perform a signature of its private data to generate the list of cryptographic data. For instance it uses the shared secret key in a 3DES based algorithm to perform a signature on the private data. The first terminal sends the list of signatures to the second terminal. The terminal will perform the same signature on its own private data to check whether it shares any common signatures with the first terminal list.

Furthermore, some of the features of the various non-limiting and exemplary embodiments of this invention may be used to advantage without the corresponding use of other features. As such, the foregoing description should be considered as merely illustrative of the principles, teachings and exemplary embodiments of this invention, and not in limitation thereof.

## Claims

1. A method of privacy-preserving during a device to device social networking, said method comprising the following steps:
- connection by device-to-device communication of a first user terminal to a second user terminal,
- elaboration and transmission of a broadcast message from the first terminal, said broadcast message comprising a request to establish a social networking session and a first list of cryptographic data of private data of the user's profile of the first user terminal,
- comparison by the second terminal of each cryptographic data of private data of its user's profile to each cryptographic data of the received list,
- when at least one cryptographic data matches, the social networking session is established.

2. The method according to the previous claim, wherein the comparison step comprises the following steps:
- when at least one cryptographic data matches, the second terminal determines the corresponding private data,
- computation of a second list of cryptographic data from the matching private data, said second list of cryptographic data being different from the first list,
- elaboration and transmission from the second terminal to the first terminal of a response message comprising the second list of cryptographic data of all the matching private data.

3. The method according to the previous claim, wherein the establishment of a social networking session comprises the following steps:
- computation by the first terminal of a second list of cryptographic data of the private data of its user's profile when it receives the response message,
- comparison of each cryptographic data of the received list to its computed cryptographic data,
- when at least one cryptographic data matches an invitation to join is sent to the second terminal.

4. The method according to the previous claim, wherein
- transmission from the second terminal to the first terminal of a response message comprising the second list of cryptographic data wherein each cryptographic data is associated to a storage position, this storage position is provided by the broadcast message to indicate the position of the corresponding private data into a memory of the first terminal,
- computation by the first terminal of the second list of cryptographic data of the private data associated of the position storage.

5. The method according to any previous claims, wherein the social networking session is established by call or by instant messaging such as SMS.

6. The method according to any claims 2 to 4, wherein the first list of cryptographic data and the second list of cryptographic data are computed respectively with a first and a second cryptographic algorithm different from each other.

7. The method according to the previous claim, wherein the first algorithm and the second cryptographic algorithm are hashing algorithms or signature algorithms.

8. The method according to any of the previous claims, wherein the broadcast message is transmitted by the first terminal to all the neighboured user terminals.

9. The method according to any of the previous claims, wherein a secure communication session is established between the user terminals before any communication exchanges.

10. The method according to the previous claim, wherein said secure communication is implemented according to key establishment protocols and shared secrets between the two terminals.

11. The method according to the previous claim, wherein the shared session key is stored in a secure element.

12. The method according to the previous claim, wherein the secure element is smartcard, SIM Card, SD Card, M2M form factor, USB keys or embedded in the user terminal.

13. The method according to the claims 11 to 12, wherein the method is a software stored and performed inside the secure terminal or the user terminal.

14. The method according to any claims 3 to 13, wherein the invitation to join comprises a signature of matched user's private data.

15. System of privacy-preserving during a device to device social networking between two user terminals connected by device to device communication, according to any previous claims.
